Europäisches Patentamt

European Patent Office

Office européen des brevets

(19)

(11) Publication number: 0 132 966
A2

# (12) EUROPEAN PATENT APPLICATION

(21) Application number: 84304511.3

(22) Date of filing: 02.07.84

(51) Int. Cl.⁴: F 16 B 21/07
F 16 L 3/12

(30) Priority: 15.07.83 DE 3325686

(43) Date of publication of application:
13.02.85 Bulletin 85/7

(84) Designated Contracting States:
FR GB IT SE

(71) Applicant: TUCKER FASTENERS LIMITED
Walsall Road
Birmingham B42 1BP(GB)

(84) Designated Contracting States:
GB

(71) Applicant: USM Corporation
426 Colt Highway
Farmington Connecticut 06032(US)

(84) Designated Contracting States:
FR IT SE

(72) Inventor: Richmond, John Frederick
'The Bungalow' Hopton Hall Lane
Hopton Stafford ST18 0AZ(GB)

(72) Inventor: Baum, Heinz Otto
Klein-Lindenerstrasse 48
D-6300 Giessen-Allendorf(DE)

(72) Inventor: Mauer, Dieter
Ostendstrasse 10
D-6304 Lollar(DE)

(74) Representative: Spencer, Hubert John et al,
PO Box No. 88 Belgrave Road
Leicester LE4 5BX(GB)

(54) Retaining clip.

(57) A clip for releasable attachment to a stud with screw threads or annular ribs has a skirt 18 which is elliptical in cross-section and has transverse ridges 28 on its long sides to engage the thread or ribs of the stud. Squeezing the skirt 18 by applying pressure at the ends of its cross-sectional major axis spreads apart the ridges 28 and releases the clip. Such deformation of the skirt 18 is limited by stop members 30 at opposite ends of its cross-sectional major axis.

Fig. 1

Croydon Printing Company Ltd.

EP 0 132 966 A2

## Retaining Clip

This invention is concerned with a retaining clip for secure engagement with a stud having a screw thread or annular ribs comprising a skirt of stiffly resilient material with inwardly directed transverse ridges for engagement with the thread or ribs of the stud when the clip is pushed down onto it.

Retaining clips which can be readily pushed onto studs with screw threads or annular ribs and released more quickly than say, for example, rotating a nut on and off a screw may be used for a variety of purposes either separately or incorporated as part of a fastener for some specific purpose, and the invention herein described has application over that broad field. However, for a detailed description reference will be made to such a clip forming a skirt at one end of a cable strap. Such a strap, but described for use in securing a pipe rather than a bundle of cables, is disclosed in West German Patent Specification 1475035, for example. Where such a strap is used for securing cables in particular, it may be desirable, in laying out the cables in electrical equipment for motor vehicles, for example, to be able to secure some in place by means of the strap, and later on to undo the strap and embrace some more cables. The strap of the said specification 1475035 is not adapted to be released and refastened in a manner which would permit the insertion of additional cables or pipes.

It is accordingly an object of the present invention to provide an improved retaining clip for pushing onto a stud with a screw thread or annular ribs and which can readily be released and lifted off the stud.

The aforegoing object is achieved in accordance with the invention in that the skirt of the clip as referred to is elongated as viewed in cross-section transversely of the axis of a stud on which it is assembled, with said ridges projecting from the long sides of the skirt at the opposite ends of its cross-sectional minor axis, the skirt being deformable in response to pressure applied at the ends of its cross-sectional major axis to spread apart said ridges and release them from the thread or ribs of the stud.

Preferably, the ridges of a clip in accordance with the invention extend widthwise over the central portion of the skirt, for about the same distance as the width of the stud on which the clip is to be assembled; they may be concavely arched for engagement with the stud. Stop members may project inwardly from said skirt at opposite ends of its cross-sectional major axis to ensure disposition of the skirt with said ridges engaging the stud and to limit deformation of the skirt.

There now follows a detailed description, to be read with reference to the accompanying drawings, of a cable strap which includes, at one end, a retaining clip embodying the invention and illustrative thereof. It will be realised that this illustrative clip has been selected for description by way of example and not of limitation of the invention.

In the accompanying drawings:

Figure 1 is a plan view, with parts broken away, of the illustrative cable strap;

Figure 2 is a view of the illustrative cable strap in longitudinal section on the line II-II of Figure 1;

Figure 3 is fragmentary view of a skirt of the strap as seen on the section line III-III of Figure 1;

Figure 4 is a view of the illustrative cable strap in side elevation, partly in section and partly broken away, shown embracing a bundle of cables and secured to a screw threaded-stud; and

Figure 5 is a plan view of a skirt at one end of the illustrative strap being released from the stud shown in Figure 4.

The illustrative cable strap is moulded in one piece of a thermoplastic material which is flexible and resilient, for example nylon. It comprises a flat flexible strip 10 having a wide portion 12 with a slot 14 running the length of it and a narrow portion 16 terminating at a skirt 18. The skirt has a cross-section which is elliptical, its major diameter transverse to the strip 10; the portion 16 of the strip is forked at 20 to support the ends of the skirt.

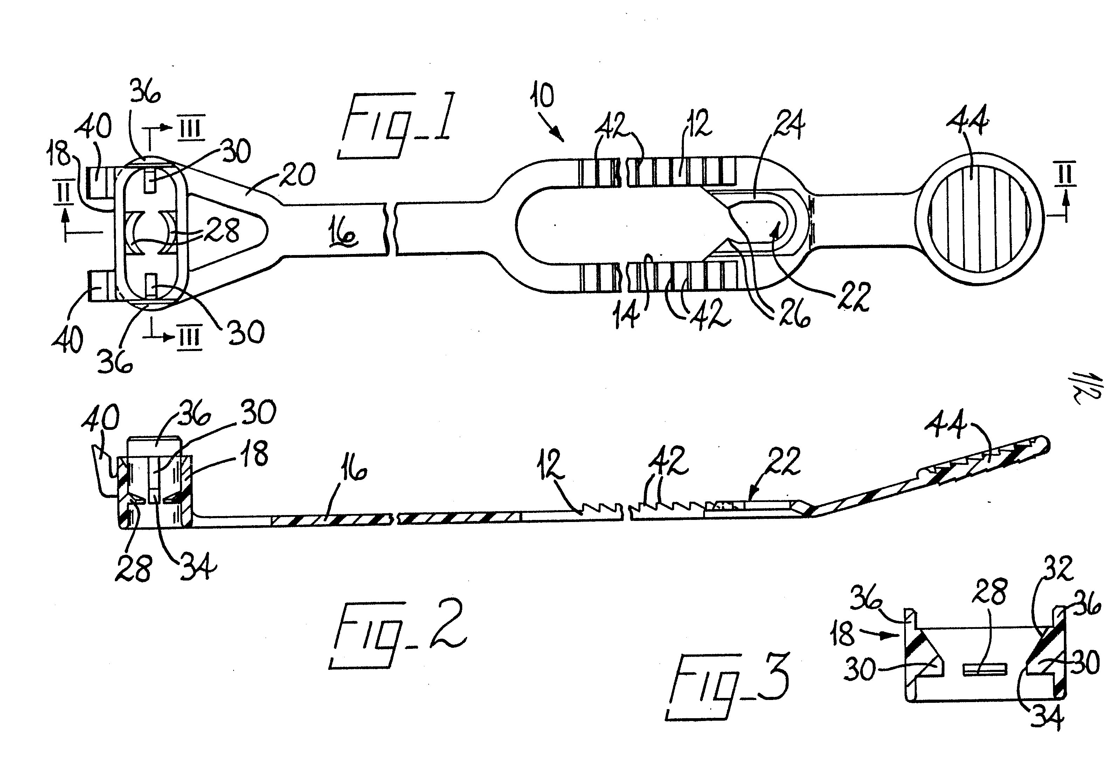

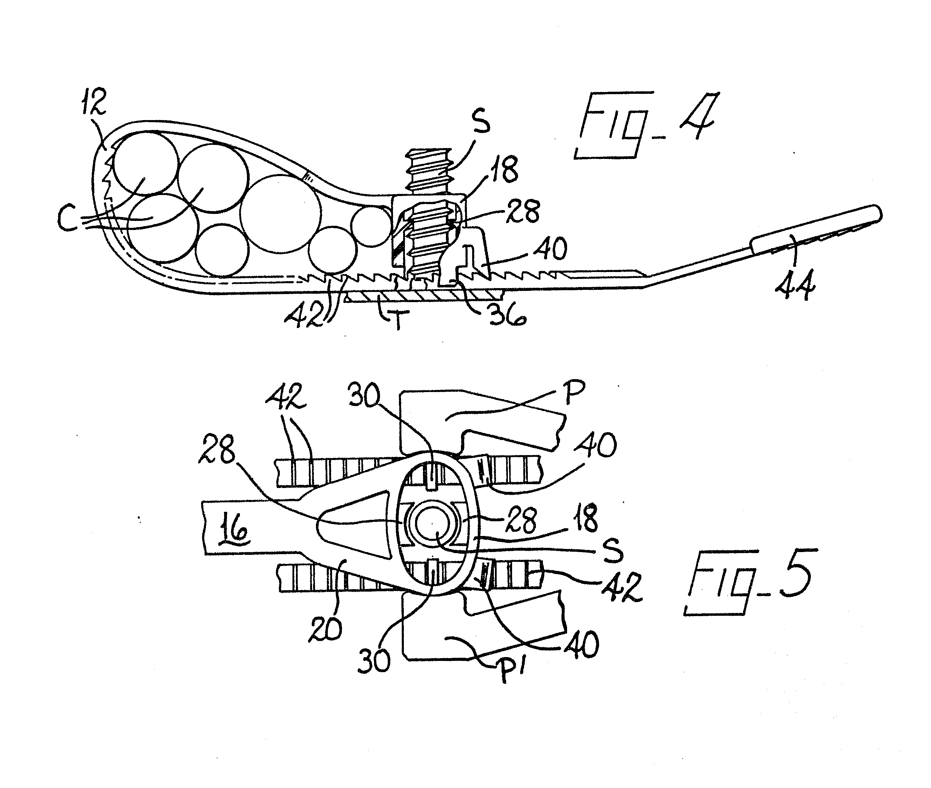

At one end of the slot 16 of the strip 10 the strap has a seat 22 provided by a ledge 24 projecting inwardly round the slot at that end, the ledge broadening at its open end to provide a constriction 26. The ledge can be introduced into the trough of a screw thread, or between annular ribs, of a stud S (Figures 3 and 4) and held there by the constriction 26 to afford at least temporary retention of the seat 22 on the stud S. A bundle of cables C can now be received by the strap and the skirt 18 brought over them and pushed down onto the stud S (Figure 3).

Referring now to the skirt 18, and regarding it as shown in Figure 4 where it is assembled on the stud S projecting upwardly from a support T, it has two inwardly directed transverse ridges 28 disposed centrally of the long sides of the skirt and each about as long as the stud S is wide. The ridges 28 have flat tops and sloping under sides for ease of assembly as the skirt slides down the stud and to ensure retention by a maximum resistance to being pulled off; the crests of the ridges 28 are concavely arched for engagement with the screw thread. At each end of the cross-sectional major axis of the skirt is a vertically disposed stop member 30 with a long inclined face 32 and short vertical face 34 to guide the skirt 18 onto the stud S and ensure the ridges 28 (or at least one of them) engage the thread.

Projecting downwardly at each end of the skirt 18 are feet 36 which, when the skirt is fully pushed down onto the stud S, abut the support T leaving sufficient space between the lower edge of the skirt and the support to accommodate the wide portion 12 of the strip 10, with the stud in the seat. At such time, two detents 40 projecting forwardly and downwardly from the skirt bear resiliently on the upper side of the strip 10 in alignment with the margins of the strip at either side of the slot 14. Each of these margins is provided on its upper surface with a row of transverse teeth 42 shaped ratchet-wise for engagement by the detents 40. Such engagement is effected, after the skirt has been pushed down the stud over the wide portion of the strip 10, by pulling on the extension of the strip, which affords a tab 44 which can readily be grasped for the purpose. Approaching faces of the detents 40 and teeth 42 are inclined to facilitate the teeth riding under the detents, opposing stop faces on the opposite sides of the detents and teeth being vertical, or nearly so. Thus, the strap is restrained by the detents 40 from loosening its grip on the bundle of cables after it has been tightened.

The tab 44 is shown having a circular termination with transversely ribbed surfaces for ease of gripping between one's fingers when pulling it.

If it is desired to release the strap, for example to remove the skirt 18 from the stud S temporarily to add more cables to the bundle, a suitable pliers-like tool with jaws P and $P^1$ may be used to squeeze the skirt 18 by applying pressure transversely of the stud axis at the ends of its cross-sectional major diameter. As shown in Figure 5, such squeezing results in deformation of the skirt 18 to a more circular configuration, limited by the stop members 30, in which the ridges 28 have been sufficiently widely separated to disengage from the stud.

Claims:

1. A retaining clip for secure engagement with a stud having a screw thread or annular ribs comprising a skirt of stiffly resilient material with inwardly directed transverse ridges for engagement with the thread or ribs of the stud when the clip is pushed down onto it characterised in that the skirt (18) is elongated as viewed in cross-section transversely of the axis of a stud (S) on which it is assembled, with said ridges (28) projecting from the long sides of the skirt (18) at the opposite ends of its cross-sectional minor axis, the skirt (18) being deformable in response to pressure applied at the ends of its cross-sectional major axis to spread apart said ridges (28) and release them from the thread or ribs of the stud.

2. A clip according to claim 1 further characterised in that said ridges are concavely arched for engagement with the stud.

3. A clip according to claim 1 further characterised in that said ridges (28) extend widthwise over a central portion of said skirt (18), for about the same distance as the width of the stud (S).

4. A clip according to claim 1 further characterised in that stop members (30) project inwardly from said skirt (18) at opposite ends of its cross-sectional major axis to ensure disposition of the skirt (18) with said ridges (28) engaging the stud (S) and to limit deformation of the skirt (18).

5. A cable strap having at one end a clip according to any one of the preceding claims.

FIG-1

FIG-2

FIG-3

36
40
18
30
20
28
40
36
10
42
12
24
44
22
26
14
42

40
36
30
18
16
12
42
22
44
28
34

1/2

36
32
28
18
36
30
30
34

0132966

Fig_4

Fig_5

0132966